# EUROPÄISCHE PATENTSCHRIFT

(11) **EP 1 628 802 B1**
(45) Veröffentlichungstag und Bekanntmachung des Hinweises auf die Patenterteilung: **06.12.2006**
(21) Anmeldenummer: 04734969.1
(22) Anmeldetag: 27.05.2004
(51) Int. Cl.: B24B 7/18, B24B 49/00

(54) **FUSSBODENSCHLEIFMASCHINE**
FLOOR SANDING MACHINE
PONCEUSE DE SOL

(30) Priorität: 28.05.2003 AT 8322003
(43) Veröffentlichungstag der Anmeldung: 01.03.2006
(73) Patentinhaber: Puchegger u. Beisteiner Parkett Gross u. Einzelhandels Ges.m.b.H., 2851 Krumbach (AT)
(72) Erfinder: PUCHEGGER, Alfred, A-2851 Krumbach (AT); BEISTEINER, Hermann, A-2851 Krumbach (AT)
(74) Vertreter: Holzer, Walter
(86) Internationale Anmeldenummer: PCT/AT2004/000184
(87) Internationale Veröffentlichungsnummer: WO 2004/105998

(56) Entgegenhaltungen:
- EP-A- 0 516 032
- WO-A-01/41621
- US-A- 3 129 539
- US-A1- 2002 011 813

## Beschreibung

Die Erfindung betrifft eine Fußbodenschleifmaschine mit einem Rahmen und einem an diesem gelagerten, unterhalb desselben angeordneten, eine Schleifscheibe aufnehmenden höhenverstellbaren Schleifteller, der gemeinsam mit einer Absaugturbine von einem Motor angetrieben ist, mit einer um den Schleifteller herum angeordneten ringförmigen Absaugdüse und mit zwei vorderen Laufrädern sowie einem Hinterrad, welche den Rahmen abstützen.

Der Bedarf an Fußbodenschleifmaschinen wächst ständig mit dem steigenden Einsatz von Holzböden anstatt Spannteppichen in privaten und geschäftlichen Räumlichkeiten und dem damit verbundenen Erfordernis nach einer wirtschaftlichen und insbesondere automatisch funktionierenden Schleifmaschine.

Die EP 0 516 032 A2 beschreibt eine Schleifmaschine zum Abschleifen der Oberfläche eines Parkett- oder Korkfußbodens, mit einem Motorträger, der auf einem aus mindestens zwei Rädern bestehenden Fahrwerk gelagert ist, einer Schleifeinrichtung an der Frontseite des Motorträgers und einem im wesentlichen nur im Bereich der dem Motorträger abgekehrten vorderen Hälfte auf dem Boden aufliegenden Schleifteller. Der Schleifteller ist einschließlich seiner Kraftübertragung durch eine Feder gegen den Boden gegenüber dem Motorträger höhenbeweglich vorgespannt, und es ist ein mit dem Motorträger starr verbundener Drehantrieb für den Schleifteller vorgesehen. Der Nachteil der bekannten Schleifmaschine ist, daß sie manuell geführt werden muß und keine Druckregelung für den Schleifteller aufweist.

Die Erfindung zielt darauf ab, diese Nachteile zu vermeiden und setzt sich zum Ziel, eine Fußbodenschleifmaschine zu schaffen, die in der Lage ist, einen hauptsächlich aus Holz bestehenden Boden eines Raumes oder zusammenhängender Räume mit einer durchgehenden Fläche vollautomatisch abzuschleifen.

Eine gemäß der Erfindung ausgebildete Fußbodenschleifmaschine der einleitend angegebenen Art zeichnet sich dadurch aus, daß eine SPS-Steuerung vorgesehen ist, welche die Meldungen von Ultraschallsensoren zur Distanzmessung des seitlichen und vorderen Abstandes der Schleifmaschine zur Wand auswertet und mittels einer Servoeinrichtung das als Spornrad ausgebildete Hinterrad und einen Hinterradantriebsmotor zur Bewegung der Schleifmaschine steuert, wobei der Anpreßdruck des Schleiftellers ebenfalls mittels der SPS-Steuerung regelbar ist, indem von der SPS-Steuerung die Leistungsaufnahme eines Elektromotors für den Anpreßdruck ausgewertet wird, über welchen ein Hebelmechanismus des Schleiftellers betätigbar ist, und wobei der Antriebsmotor der Absaugturbine und des Schleiftellers mittels der SPS-Steuerung derart steuerbar ist, daß die Schleifmaschine von der SPS-Steuerung automatisch abschaltbar ist.

Nach einem weiteren Erfindungsmerkmal zeichnet sich die Fußbodenschleifmaschine dadurch aus, daß der Schleifteller mit einer zylinderförmig ausgebildeten Hohlwelle verbunden ist und in der Mitte eine Öffnung zur Hohlwelle aufweist.

Nach einem anderen Erfindungsmerkmal ist das Spornrad an der Unterseite einer Rahmengrundplatte mittels einer senkrechten Welle gelagert, welche in beiden Richtungen um ihre Drehachse verdrehbar ist.

Durch den erfindungsgemäßen Einsatz einer SPS-Steuerung in Kombination mit Ultraschallsensoren ist ein äußerst flexibler, vollautomatischer und kostengünstiger Betrieb einer Fußbodenschleifmaschine möglich. Ein weiterer Vorteil der Erfindung ist, daß durch den automatisch regelbaren Anpressdruck eine Schleifoberfläche von besonderer Güte und Ebenheit entsteht. Durch die Hohlwelle und der Öffnung des Schleiftellers kann sich ein Luftstrom zwischen dem Schleifteller und der zu schleifenden Fläche bilden, wodurch das Verkleben des Schleifkorns der Schleifscheibe bei hoher Schleifgeschwindigkeit verhindert wird.

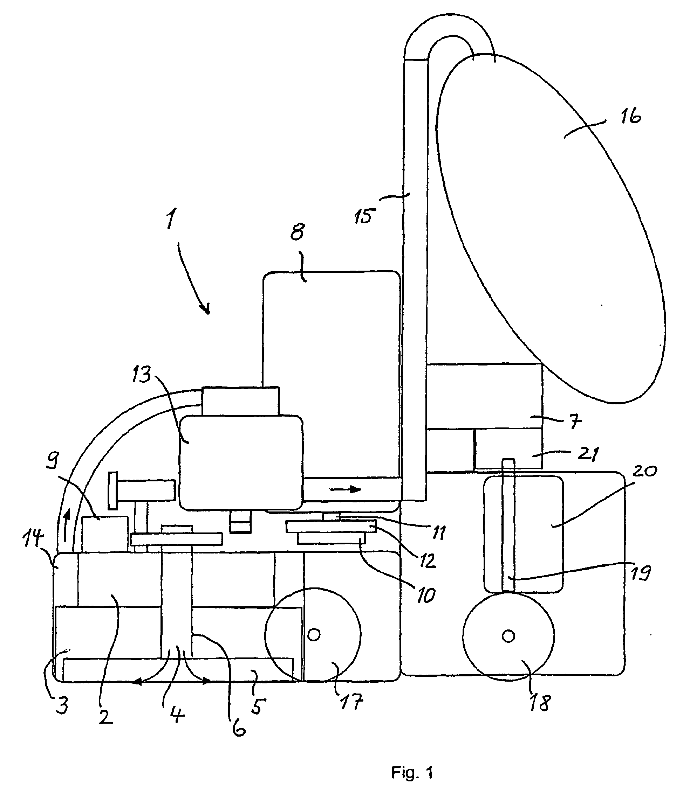

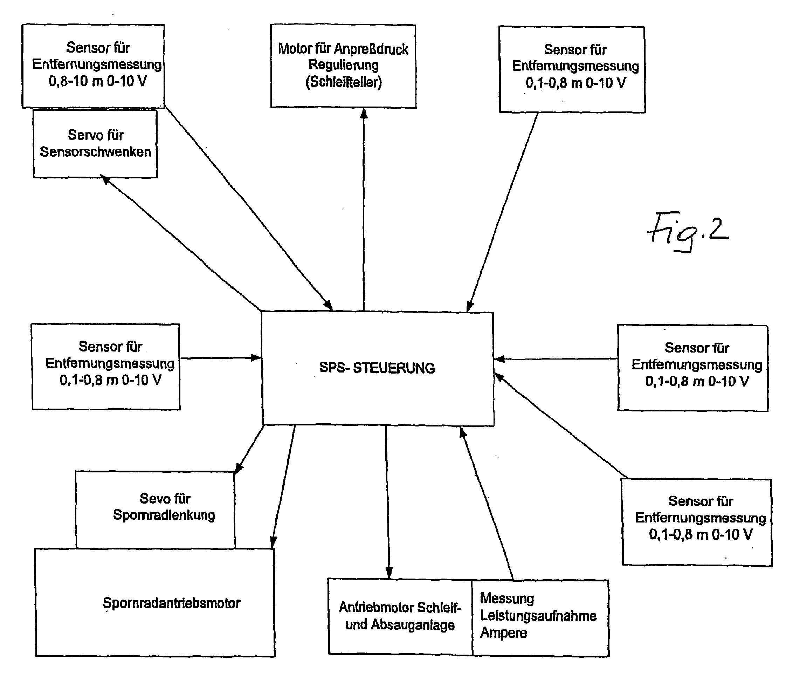

Die Erfindung wird nachfolgend an einem Ausführungsbeispiel unter Bezugnahme auf die Zeichnungen näher erläutert. Es zeigen: Fig. 1 eine Schleifmaschine und Fig. 2 schematisch den Informationsaustausch einer SPS-Steuerung mit den Komponenten der Schleifmaschine.

Die erfindungsgemäße Schleifmaschine 1 hat einen Grundrahmen mit einer Platte 2, die an ihrer Unterseite eine umlaufende Schürze 3 aufweist.

Eine rotierende und zylinderförmig ausgebildete Hohlwelle 4 mit einem eine Schleifscheibe aufnehmenden Schleifteller 5, welcher in der Mitte eine Öffnung zur Hohlwelle aufweist und mit hoher Umfangsgeschwindigkeit antreibbar ist, ist in einer Führung 6 gelagert. Diese Führung 6 ist an der Unterseite der Grundplatte 2 angebracht.

Der Anpreßdruck des Schleiftellers 5 wird von einer SPS-Steuerung 7 automatisch geregelt, indem die Steuerung 7 die Leistungsaufnahme eines den Hebelmechanismus des Schleiftellers 5 betätigenden E-Motors 9 auswertet, um den E-Motor 9 auf einen vorbestimmten Druck einzustellen. Die Übertragung des Drehmomentes vom Antriebsmotor 8 zur Schleifwelle 4 erfolgt über einen Keilriemen einer Riemenscheibe 10.

Auf einer Welle 11 des Antriebsmotors 8 sitzt eine zweite Keilriemenscheibe 12, die eine Absaugturbine 13 antreibt. Der damit erzeugte Saugdruck befördert den Schleifstaub, der von der Schleifscheibe des Schleiftellers 5 nach außen geschleudert wird, über eine ringförmige Absaugdüse 14, die um den Schleifteller 5 herum angebracht ist, und über eine Rohrleitung 15 zu einem Staubsack 16. Hierdurch wird verhindert, daß durch die hohe Schleifgeschwindigkeit das Schleifkorn der Schleifscheibe verklebt. Die Luftbewegung wird durch die Fliehkraft des Schleiftellers 5, die in der Mitte eine Öffnung zur hohlen Schleifwelle 4 hat, erzwungen.

Die Schleifmaschine weist drei Räder auf, wobei je ein als Laufrad 17 ausgeführtes Rad auf der linken und rechten Seite, knapp hinter dem Schleifteller 5 an der Unterseite der Grundplatte 2 der Schleifmaschine 1 vorgesehen ist. Das dritte als Antriebsrad-Spornrad 18 ausgeführte Rad ist in der Mitte der Unterseite der Grundplatte 2 mittels einer drehbaren Welle 19 gelagert, welche von einem Getriebemotor 20 angetrieben wird.

Die Lenkung und Richtungsänderung der Schleifmaschine 1 wird dadurch erreicht, daß die senkrechte Welle 19 in beiden Richtungen um ihre Drehachse verdreht werden kann.

Der Antriebsmotor 8 und die Staubsaugturbine 13 sind auf der Oberseite der Grundplatte 2 angebracht. Der Staubsack 16 ist auf der Saugrohrleitung 15 montiert und überragt die Komponenten auf der Oberseite des Schleifmaschine 1.

Die Schleifmaschine 1 wird im Wandbereich des zu schleifenden Raumes in Gang gesetzt und Ultraschallsensoren für den Nahbereich und solche für größere Abstände melden den seitlichen und den vorderen Abstand der Schleifmaschine 1 zur Wand. Die SPS-Steuerung 7 wertet die Meldungen der Ultraschallsensoren aus und steuert mit einer Servoeinrichtung 21 für die Spornradlenkung und den Spornradantriebsmotor 20 die Bewegung der Schleifmaschine 1 entlang der Wand, und vergrößert den Abstand zur Wand, nachdem die Schleifmaschine 1 wieder am Ausgangspunkt ihrer Schleifumlaufbahn angelangt ist. Dies geschieht so lange, bis der Boden des Raumes einmal oder mehrmals vollflächig geschliffen wurde. Danach wird die Schleifmaschine 1 von der SPS-Steuerung 7 automatisch abgeschaltet.

Seitlich und am vorderen Ende der Schleifmaschine 1 angebrachte Sensoren fungieren als Not-Ausschalter und verhindern ein Anstoßen des Schleifautomaten 1 an die Wand.

Bereiche, wie z.B. Fliesenflächen, die nicht von der Schleifmaschine 1 geschliffen werden sollen, werden mit Ständern abgegrenzt, zwischen denen eine Folie oder ähnliches gespannt ist.

## Patentansprüche

1. Fußbodenschleifmaschine (1) mit einem Rahmen und einem an diesem gelagerten, unterhalb desselben angeordneten, eine Schleifscheibe aufnehmenden höhenverstellbaren Schleifteller (5), der gemeinsam mit einer Absaugturbine (13) von einem Motor angetrieben ist, mit einer um den Schleifteller herum angeordneten ringförmigen Absaugdüse (14) und mit zwei vorderen Laufrädern (17) sowie einem Hinterrad (18), welche den Rahmen abstützen, **dadurch gekennzeichnet, daß** eine SPS-Steuerung (7) vorgesehen ist, welche die Meldungen von Ultraschallsensoren zur Distanzmessung des seitlichen und vorderen Abstandes der Schleifmaschine (1) zur Wand auswertet und mittels einer Servoeinrichtung (21) das als Spornrad (18) ausgebildete Hinterrad und einen Hinterradantriebsmotor (20) zur Bewegung der Schleifmaschine (1) steuert, wobei der Anpreßdruck des Schleiftellers (5) ebenfalls mittels der SPS-Steuerung (7) regelbar ist, indem von der SPS-Steuerung (7) die Leistungsaufnahme eines Elektromotors (9) für den Anpreßdruck ausgewertet wird, über welchen ein Hebelmechanismus des Schleiftellers (5) betätigbar ist, und wobei der Antriebsmotor (8) der Absaugturbine (13) und des Schleiftellers (5) mittels der SPS-Steuerung (7) derart steuerbar ist, daß die Schleifmaschine (1) von der SPS-Steuerung (7) automatisch abschaltbar ist.

2. Fußbodenschleifmaschine nach Anspruch 1, **dadurch gekennzeichnet, daß** der Schleifteller (5) mit einer zylinderförmig ausgebildeten Hohlwelle (4) verbunden ist und in der Mitte eine Öffnung zur Hohlwelle (4) aufweist.

3. Fußbodenschleifmaschine nach Anspruch 1 oder 2, **dadurch gekennzeichnet, daß** das Spornrad (18) an der Unterseite einer Rahmengrundplatte (2) mittels einer senkrechten Welle (19) gelagert ist, welche in beiden Richtungen um ihre Drehachse verdrehbar ist.

4. Fußbodenschleifmaschine nach Anspruch 2 oder 3, **dadurch gekennzeichnet, daß** die Hohlwelle (4) in einer Führung (6) gelagert ist, welche an der Unterseite der Grundplatte (2) angebracht ist.

## Claims

1. Floor-sanding machine (1), with a frame and a height-adjustable sanding plate (5), positioned thereon, arranged underneath it, accommodating a sanding disc and driven by a motor jointly with an extraction turbine (13), with an annular extraction nozzle (14), arranged round the sanding plate, and with two front running wheels (17) and one rear wheel (18), which support the frame, **characterised in that** an SPS control (7) is provided, which analyses the messages from ultrasound sensors for distance measuring of the side and front distance of the sanding machine (1) from the wall and by means of a servo device (21) controls the rear wheel constructed as a tail wheel (18) and a rear wheel drive motor (20) for moving the sanding machine (1), wherein the contact pressure of the sanding plate (5) is likewise regulatable by the SPS control (7), **in that** the power consumption of an electric motor (9) is analysed by the SPS control for the contact pressure via which a lever mechanism of the sanding plate (5) is actuatable and wherein the drive motor (8) of the extraction turbine (13) and of the sanding plate (5) are controllable by means of the SPS control (7) in such a way that the sanding machine (1) can be automatically switched off by the SPS control (7).

2. Floor-sanding machine according to claim 1, **characterised in that** the sanding plate (5) is connected to a cylindrically constructed hollow shaft (4) and has an opening to the hollow shaft (4) in the centre.

3. Floor-sanding machine according to claim 1 or 2, **characterised in that** the tail wheel (18) is positioned on the underside of a frame base-plate (2) by means of a perpendicular shaft (19), which is rotatable about its axis of rotation in both directions.

4. Floor-sanding machine according to claim 2 or 3, **characterised in that** the hollow shaft (4) is positioned in a guide (6) attached to the underside of the base-plate (2).

## Revendications

1. Ponceuse de sol (1) comportant un châssis et un porte-disque de ponçage (5) réglable en hauteur, recevant un disque de ponçage logé et disposé au-dessous dudit châssis, qui est entraîné conjointement avec une turbine d'aspiration (13) par un moteur, avec une buse d'aspiration (14) circulaire disposée autour du porte-disque de ponçage et avec deux roues avant (17), ainsi qu'une roue arrière (18) qui supporte le châssis, **caractérisée en ce qu'**il est prévu une commande à programme enregistré (7) qui analyse les émissions des capteurs ultrasons pour la mesure de la distance de l'espacement latéral et frontal de la ponceuse (1) par rapport au mur et, au moyen d'un dispositif de servocommande (21), commande la roue arrière conçue comme roue d'entraînement (18) et un moteur d'entraînement de roue arrière (20) pour le déplacement de la ponceuse (1), dans lequel la pression d'appui du porte-disque de ponçage (5) est également réglable au moyen de la commande à programme enregistré (7), tandis que la prise de puissance d'un moteur électrique (9) pour la pression d'appui est évaluée par la commande à programme enregistré (7), pression d'appui au moyen de laquelle un mécanisme à levier du porte-disque de ponçage (5) peut être actionné, et dans lequel le moteur d'entraînement (8) de la turbine d'aspiration (13) et du porte-disque de ponçage (5) peut être commandé au moyen de la commande à programme enregistré (7) de telle sorte que la ponceuse (1) peut être arrêtée automatiquement par la commande à programme enregistré (7).

2. Ponceuse selon la revendication 1, **caractérisée en ce que** le porte-disque de ponçage (5) est raccordé à un arbre creux (4) conçu sous la forme d'un cylindre et présente au centre une ouverture pour l'arbre creux (4).

3. Ponceuse selon la revendication 1 ou 2, **caractérisée en ce que** la roue d'entraînement (18) est logée sur le côté inférieur d'une embase de châssis (2) au moyen d'un arbre vertical (19) qui peut être mis en rotation dans les deux directions autour de son axe de rotation.

4. Ponceuse selon la revendication 2 ou 3, **caractérisée en ce que** l'arbre creux (4) est logé dans un guidage (6) qui est disposé sur le côté inférieur de l'embase (2).
